# DEMANDE DE BREVET EUROPEEN

(11) **EP 1 510 449 A2**
(43) Date de publication de la demande: **02.03.2005**
(21) Numéro de dépôt: 04360073.3
(22) Date de dépôt: 12.08.2004
(51) Int. Cl.: B62K 3/00, B62M 1/04

(54) **Système autonome de propulsion pour la trottinette classique**

(30) Priorité: 27.08.2003 FR 0310196
(71) Demandeur: Bilghiru, Gheorghe, 67000 Strasbourg (FR)
(72) Inventeur: Bilghiru, Gheorghe, 67000 Strasbourg (FR)

(57) **Abrégé**

L'invention concerne le domaine des véhicules de loisirs et plus précisément la trottinette classique qui ne possède pas son propre système de propulsion, ce qui oblige l'usager de pousser contre le sol pour faire avancer le véhicule.

Pour pallier à cet inconvénient la solution proposée est l'installation d'un système autonome de propulsion sur ladite trottinette. Le système se compose de deux pédales (4) superposées au châssis (1) et attachées à celui-ci. Les pédales (4) susmentionnées entraînent des disques (8) couplés à des plateaux (9) dentés, lesdits plateaux (9) agissant, à travers des pignons (15) intermédiaires, sur des pignons (14) de type roue libre situés sur la roue (3) motrice.

Le système autonome de propulsion proposé est particulièrement destiné aux véhicules de loisirs sans moteur.

## Description

L'invention concerne le domaine des véhicules de loisirs sans moteur et plus précisément un système autonome de propulsion pour la trottinette classique.

La trottinette classique ne possède pas de moyen autonome de propulsion. Le problème est que l'usager doit s'appuyer et pousser contre le sol avec un des pieds pour faire avancer le véhicule.

Pour remédier à cet inconvénient, et donc rendre le véhicule indépendant par rapport au sol, la solution proposée est l'installation sur la trottinette classique d'un système autonome de propulsion. Le dispositif selon l'invention est donc caractérisé par ce que la structure de base comporte un châssis muni de roues sur lequel ledit système de propulsion est installé. Deux pédales sont positionnées au-dessus du châssis, leurs extrémités avant présentant des axes de rotation fixés sur ledit châssis. Leurs extrémités arrière présentent des fenêtres de guidage qui entraînent des manetons fixés sur des disques. Des plateaux dentés sont fixés sur les disques mentionnés. Les ensembles formés par les manetons avec les disques et les plateaux dentés sont positionnés symétriquement de part et d'autre de la roue arrière du dispositif et tournent sur des axes fixés sur le châssis. Des ressorts hélicoïdaux sont installés dans l'espace ménagé entre les disques et les plateaux dentés par des manchons fixés sur les vis d'assemblage de ces deux éléments. Lesdits ressorts ont une extrémité attachée aux axes de rotation des disques susmentionnés. L'autre extrémité des ressorts est attachée aux vis d'assemblage qui fixent l'ensemble formé par les disques avec les plateaux dentés et les manetons. Des pignons de type roue libre sont fixés concentriquement de part et d'autre sur la roue arrière qui est située sur un axe de rotation attaché au châssis, lesdits pignons étant solidaires de celle-ci et l'entraînant dans leur mouvement de rotation. Des pignons intermédiaires tournant sur des axes fixés sur le châssis sont intercalés entre les plateaux dentés et les pignons de type roue libre, faisant le transfert de mouvement entre lesdits plateaux dentés et les pignons de type roue libre. Dans une autre réalisation, des chaînes d'entraînement remplacent les pignons intermédiaires. Les plateaux dentés ainsi que les pignons de type roue libre mentionnés auparavant ayant, dans cette variante constructive, le profil adéquat pour accueillir lesdites chaînes d'entraînement. Dans une autre variante constructive, non illustrée, les plateaux dentés mentionnés sont remplacés par des poulies, les pignons de type roue libre étant remplacés par des roulements unidirectionnels dont la bague extérieure est de type poulie tandis que des courroies de transmission remplacent les pignons intermédiaires. Les pédales peuvent travailler ensemble ou indépendamment grâce aux deux pignons de type roue libre utilisés dans le système de propulsion. Cette indépendance des pédales, l'une par rapport à l'autre, est une des caractéristiques qui font la différence avec d'autres systèmes de propulsion à pédales. Cette caractéristique du système améliore d'une manière saisissante le confort d'utilisation, permettant à l'usager de se reposer pendant l'avancement inertiel du dispositif, ayant le poids corporel équitablement distribué sur les deux pédales qui reposent sur le châssis du dispositif.

Les dessins annexés illustrent l'invention :

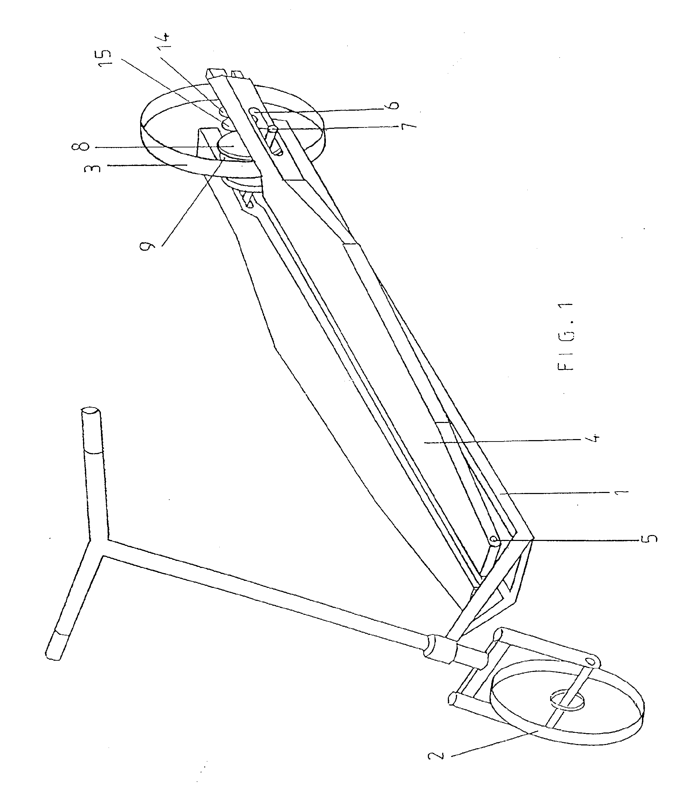

La figure 1 représente une vue générale du dispositif.

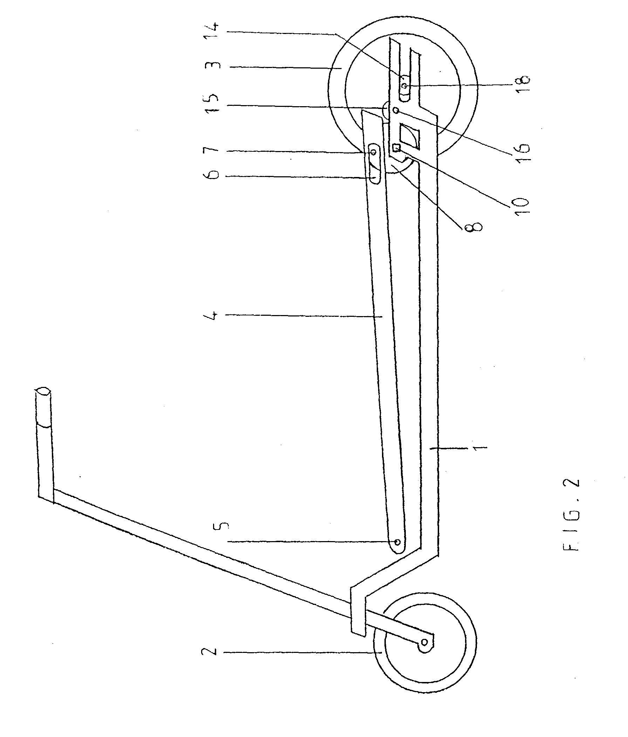

La figure 2 représente une vue latérale du dispositif.

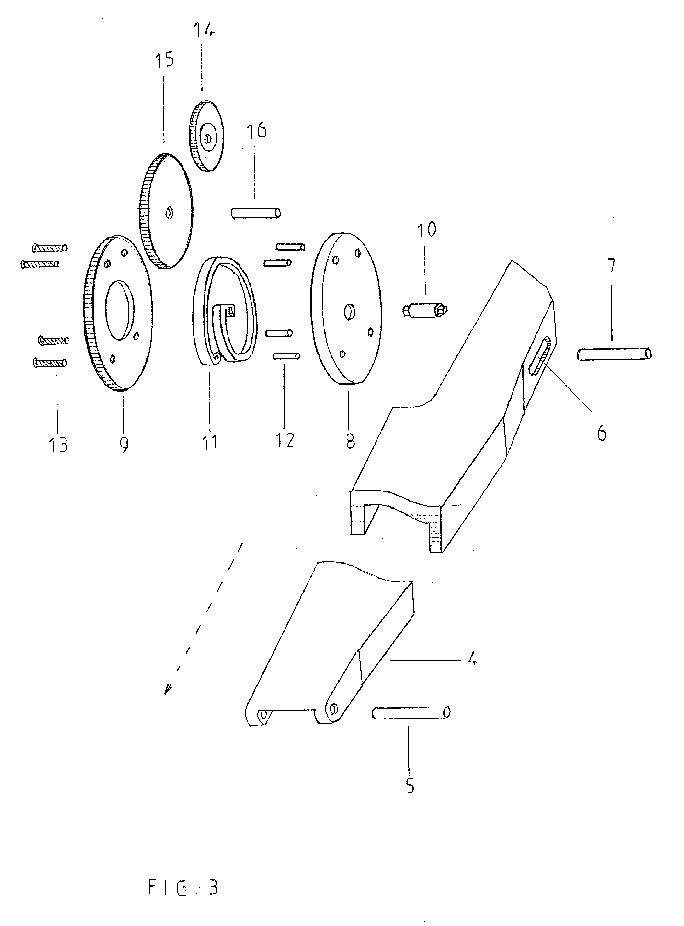

La figure 3 représente une vue du système de propulsion déployé.

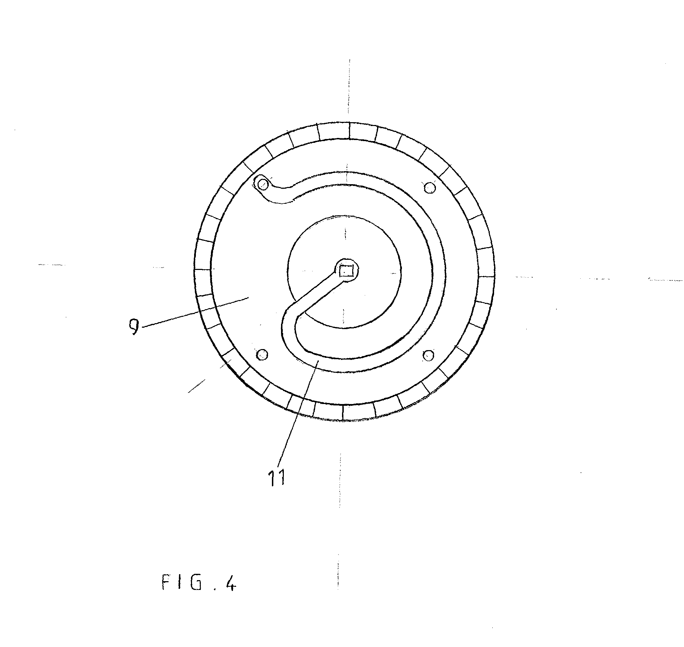

La figure 4 représente une vue de l'agencement du ressort hélicoïdal par rapport au plateau denté.

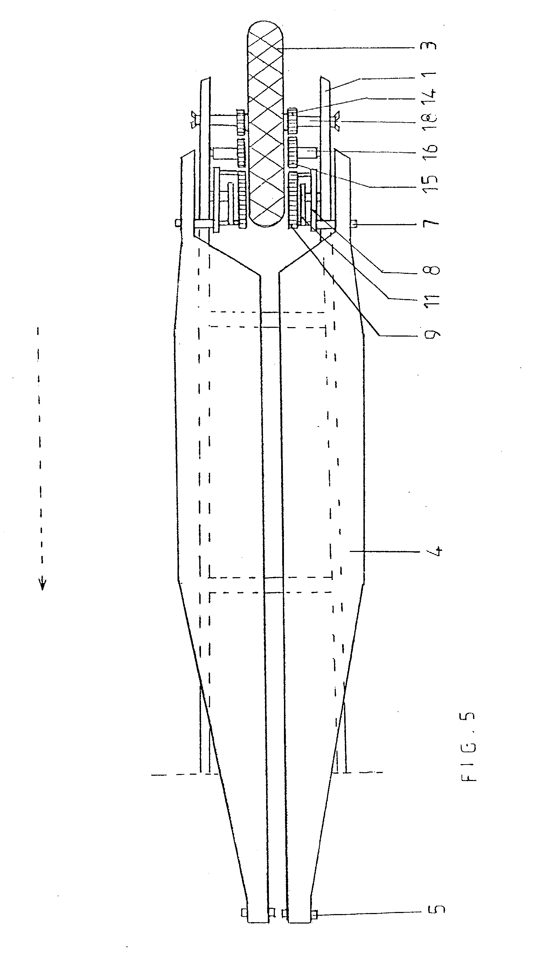

La figure 5 représente une vue d'en haut du système de propulsion.

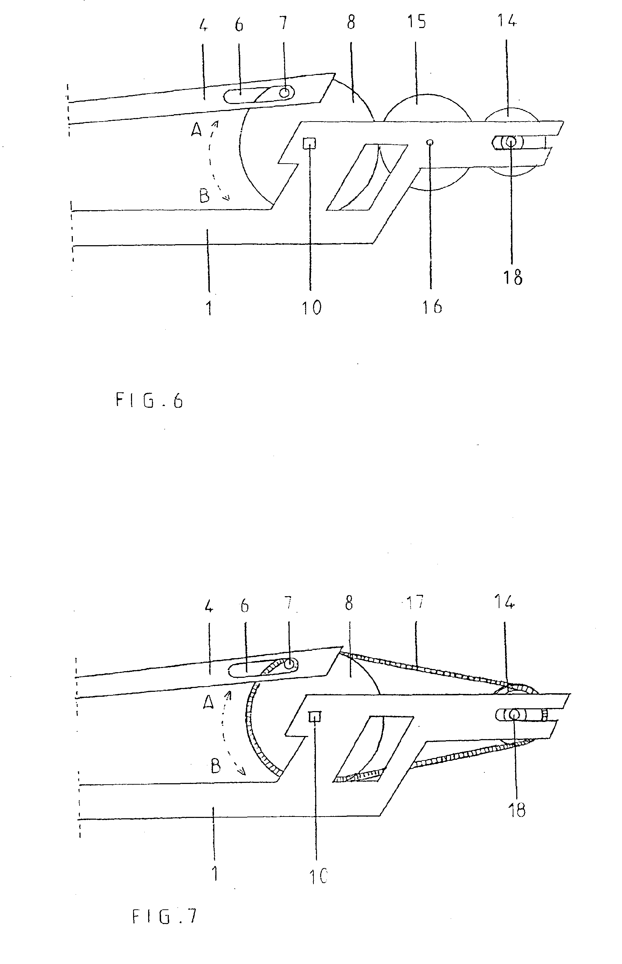

La figure 6 représente une vue latérale, partielle, du dispositif.
La figure 7 représente une vue latérale, partielle, du dispositif dans une autre réalisation.

En référence à ces dessins, le dispositif selon l'invention se compose d'une structure de base qui comporte le châssis (1) avec son train roulant composé de deux roues (2, 3). Sur cette structure de base est installé le système de propulsion susmentionné . Il se compose de plusieurs éléments. Deux pédales (4) parallèles sont positionnées au-dessus du châssis (1). Les extrémités avant des pédales (4) sont attachées aux axes (5) fixés sur le châssis (1) et tournent autour desdits axes (5). Leurs extrémités arrière comportent deux fenêtres (6) de guidage qui gèrent le fonctionnement de deux manetons (7) qu'elles entraînent dans leur mouvement. Lesdits manetons (7) sont fixés sur deux disques (8) sur lesquels deux plateaux (9) dentés sont également fixés. Des vis (13) assemblent les manetons (7), les disques (8) et les plateaux (9) dentés. Des manchons (12), fixés sur les vis (13), ménagent un espace entre les disques (8) et les plateaux (9) dentés. Dans cet espace sont positionnés des ressorts (11) hélicoïdaux ayant une extrémité fixée sur les axes (10) de rotation des disques (8) tandis que l'autre extrémité est fixé sur les manchons (12) présents sur les vis (13). Les ensembles formés par les disques (8), les plateaux (9) dentés, les ressorts (11) hélicoïdaux et les manetons (7) sont positionnés symétriquement de part et d'autre de la roue (3) arrière et en parallèle avec celle-ci. Ces ensembles tournent sur des axes (10) fixés sur le châssis (1). Deux pignons (14) de type roue libre sont fixés concentriquement de part et d'autre sur la roue (3) arrière qui est munie d'un axe (18) de rotation, lesdits pignons (14) étant solidaires de celle-ci. Deux pignons (15) intermédiaires, tournant sur des axes (16) fixés sur le châssis (1), sont positionnés entre les plateaux (9) dentés et les pignons (14) de type roue libre, dans le même plan que ceux-ci et en contact avec eux. Le système fonctionne suivant un cycle selon lequel les pédales (4) exécutent un mouvement pendulaire suite à la pression exercée par l'usager. Les extrémités avant des pédales (4) exécutent une rotation alternative et limitée autour de leurs axes (5) respectifs tandis que les extrémités arrière exécutent un mouvement alternatif entre les points imaginaires (A, B) qui marquent leur position (A) haute et (B) basse par rapport au châssis (1). La position (A) haute, initiale, correspond à la position du système au repos et au début du cycle de fonctionnement. Sous la pression exercée par les pieds de l'usager sur les pédales (4), d'une manière alternative, celles-ci exécutent le mouvement pendulaire précité entraînant par leurs extrémités arrière et par le biais des manetons (7) les disques (8) et les plateaux (9) dentés, dans un mouvement de rotation limité et alternatif selon le sens du mouvement des pédales (4). Le mouvement limité et alternatif des plateaux (9) dentés se transmet au moyen des pignons (15) intermédiaires aux pignons (14) de type roue libre solidaires de la roue (3) arrière du dispositif. Celle-ci tourne propulsant le dispositif. Quand la pression exercée par l'usager sur les pédales (4) cesse, celles-ci montent sous la poussée contraire exercée par les ressorts (11) hélicoïdaux, regagnant leur position haute (A), initiale, étant ainsi prêtes pour recommencer un nouveau cycle de fonctionnement. Grâce aux pignons (14) de type roue libre, les deux pédales (4) peuvent travailler indépendamment ou ensemble. Cette indépendance des pédales (4) est une des caractéristiques les plus intéressantes de ce système et fait la différence avec d'autres systèmes de propulsion à pédales. Ainsi, l'usager s'appuie sur les pédales (4) d'une manière alternative, déplaçant alternativement son poids sur le pied respectif d'appui. Mais, avec ce système de propulsion, il peut également s'appuyer simultanément sur les deux pédales (4) et répartir son poids sur les deux pieds d'une manière équitable. Cette dernière position est possible pendant l'avancement par inertie du dispositif et augmente considérablement le confort d'utilisation du dispositif, offrant à l'utilisateur des moments de repos relatif.

Le dispositif selon l'invention propose un système autonome de propulsion destiné à équiper des véhicules de loisirs sans moteur tels que trottinettes, bicyclettes, tricycles, etc.

## Revendications

1. Système autonome de propulsion **caractérisé par** ce qu'il est constitué de plusieurs éléments dont deux pédales (4) parallèles, positionnées au-dessus d'un châssis (1) muni de roues (2, 3), lesdites pédales (4) ayant les extrémités avant reliées par des axes (5) au châssis (1) susmentionné tandis que les extrémités arrière sont reliées, par le biais de fenêtres (6) de guidage et de manetons (7), aux disques (8) soutenus par les axes (10) fixés sur le châssis (1), lesdits disques (8) étant couplés aux plateaux (9) dentés et étant munis de ressorts (11) hélicoïdaux, les plateaux (9) dentés susmentionnés étant en relation avec les pignons (14) de type roue libre fixés de façon concentrique de part et d'autre sur la roue (3) située sur l'axe (18) de rotation, ladite relation étant établie au moyen de pignons (15) intermédiaires.

2. Système autonome de propulsion, selon la revendication 1, **caractérisé par** ce que les manetons (7) sont solidaires des disques (8) en étant également présents à l'intérieur des fenêtres (6) de guidage existantes aux extrémités arrière des pédales (4).

3. Système autonome de propulsion, selon la revendication 1, **caractérisé par** ce que les plateaux (9) dentés sont solidaires des disques (8) au moyen des vis (13) d'assemblage, un espace étant ménagé, par le biais des manchons (12) installés sur les vis (13), entre lesdits plateaux (9) dentés et les disques (8) susmentionnés.

4. Système autonome de propulsion, selon la revendication 1, **caractérisé par** ce que des ressorts (11) hélicoïdaux, constituant des moyens de rappel, sont logés dans l'espace existant entre les disques (8) et les plateaux (9) dentés, chaque ressort ayant une extrémité fixée sur un des axes (10) tandis que l'autre extrémité est attachée à l'un des manchons (12) installé sur l'une des vis (13) d'assemblage.

5. Système autonome de propulsion, selon les revendications précédentes, **caractérisé par** ce que, dans une autre réalisation, des chaînes (17) d'entraînement remplacent les pignons (15) intermédiaires, les plateaux (9) dentés ainsi que les pignons (14) de type roue libre ayant, dans cette variante constructive, le profil adéquat pour accueillir les chaînes (17) d'entraînement mentionnées précédemment.

6. Système autonome de propulsion, selon les revendications précédentes, **caractérisé par** ce que, dans une autre variante constructive non illustrée, les plateaux (9) dentés mentionnés sont remplacés par des poulies et les pignons (14) de type roue libre par des roulements unidirectionnels dont la bague extérieure est de type poulie, tandis qu'une courroie de transmission remplace les pignons (15) intermédiaires.
